# EUROPEAN PATENT APPLICATION

(11) **EP 1 557 119 A1**
(43) Date of publication of application: **27.07.2005**
(21) Application number: 05000579.2
(22) Date of filing: 13.01.2005
(51) Int. Cl.: A47J 31/30

(54) **Ground coffee containing filter for mocha coffee maker and mocha coffee maker including said filter**

(30) Priority: 20.01.2004 IT MI20040064
(71) Applicant: Beniamino Holding S.r.l., 25067 Lumezzane S.A. (Brescia) (IT)
(72) Inventor: Ghidini, Tiziano, 25065 Lumezzane (BS) (IT)
(74) Representative: Faraggiana, Vittorio, Dr. Ing.

(57) **Abstract**

A ground coffee containing filter to be used in mocha coffee makers includes a pierced bottom (23) and an outer shell (22) having a cylindrical internal wall which contributes with the pierced bottom (23) to definition of the space containing the ground coffee in the filter. The containing filter (15) is characterized in that the pierced bottom (23) is movable inside the outer shell (22) between a fully lowered position for receiving the fullest amount of ground coffee in the filter (15) and at least one raised position such as to reduce the capacity of the filter (15) with there being means of engagement between the pierced bottom (23) and the outer shell (22) in said raised position.

## Description

The present invention relates to a coffee-containing filter for a mocha coffee makers and a coffee maker using said containing filter.

The so-called Italian mocha coffee maker has been well known in the prior art for several years. This coffee maker typically includes a lower water boiler and a funnelling filter where the ground coffee is placed and a recipient for collection of the coffee produced with the coffee maker. During operation of the coffee maker the lower tube of the funnelling filter extends into the boiler, which is arranged in direct contact with a heat source, for example a gas burner. Once the water reaches boiling temperature, pressure is created in the boiler such that the water rises through the lower tube until it reaches the ground coffee contained in the funnelling filter. When passing through the ground coffee the water absorbs the coffee aroma and again thrust by the pressure in the boiler continues rising in a delivery tube to reach the coffee collection recipient.

In past years the Italian mocha coffee maker has spread much in the market and allowed all its users to prepare espresso coffee of good quality in relatively short time. Under some circumstances however use of the coffee maker is rather inconvenient and its operation is not at all flexible.

Indeed, when one proceeds to remove the ground coffee after using the coffee maker, it is necessary to remove the funnelling filter from the coffee maker and clean it with the hands or with special brushes. This operation proves to be quite inconvenient and laborious because the ground coffee soaked with water tends to become compact in the funnelling filter and adhere to the inner walls of said filter. Therefore, it is usually necessary to strike the filter against the garbage can or in the sink to force out the soaked and compact coffee grounds. During this operation the ground coffee can easily be made to splatter where it is not wanted and create dirty spots in the surrounding area and on the clothes of the coffee-maker user.

In addition to the above-mentioned shortcomings, the mocha coffee maker in accordance with the prior art is characterized by unquestionably poor operating flexibility. Indeed, to ensure good operation of the coffee maker the funnelling filter must always be filled completely. Thus, when one might wish to prepare a smaller amount of coffee than the maximum allowed by the coffee maker, the same amount of ground coffee is always used. This obviously involves considerable waste of ground coffee, especially when the mocha coffee maker available is large for example like a coffee maker for 6 or 8 coffee cups and it is desired to prepare coffee for a small number of persons.

The general purpose of the present invention is to remedy the above-mentioned shortcomings by making available a containing filter which would be easy and convenient to clean after making the coffee.

Another purpose of the present invention is to make available a mocha coffee maker allowing flexible operation with the capability of varying the amount of coffee prepared while avoiding waste of ground coffee.

In view of this purpose it was sought to provide in accordance with the present invention a containing filter to be used in a mocha coffee maker including a water boiler communicating with the filter through a lower tube of the filter and a coffee collecting recipient communicating below with the filter with said containing filter including a pierced bottom and an outer shell having a cylindrical internal wall which contributes with the pierced bottom to defining the space containing the ground coffee in the filter and characterized in that the pierced bottom is movable in the outer shell between a fully lowered position for receiving the fullest amount of ground coffee in the filter and at least one raised position reducing the capacity of the filter with there being means of engagement between the pierced bottom and the outer shell in said raised position.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a side view of a mocha coffee maker in accordance with the present invention;
FIG 2 shows a side view of the containing filter for the ground coffee;
FIG 3 shows a side view and a top view of the pierced bottom of the containing filter of FIG 2;
FIG 4 shows a side view of the ground coffee containing filter configured for the cleaning operations;
FIG 5 shows a side view of the containing filter configured to prepare a limited amount of coffee; and
FIG 6 shows a top view of the filter configured as in FIG 5.

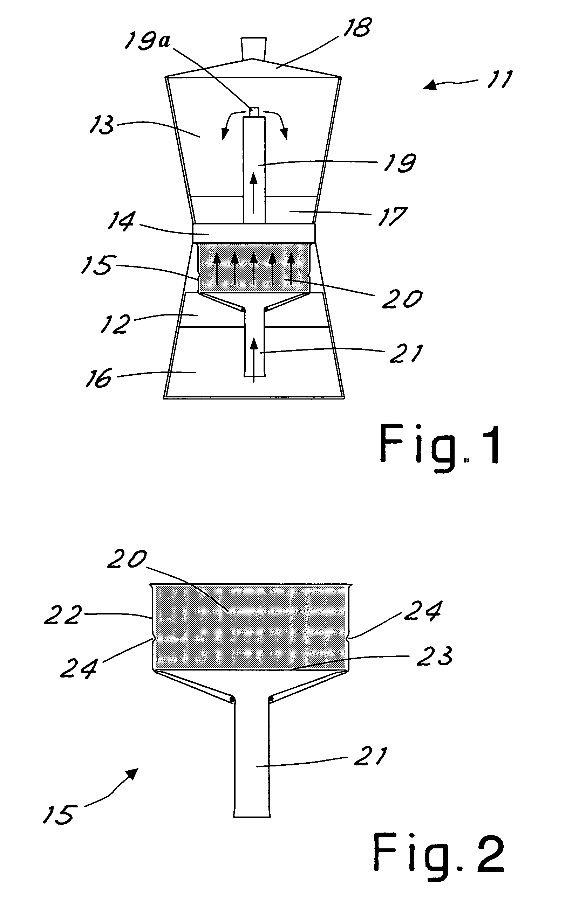

With reference to the figures, FIG 1 shows a mocha coffee maker 11 realized in accordance with the present invention. It includes a boiler 12, a ground coffee containing filter 15 and a collection recipient 13 for the coffee prepared in the coffee maker 11. Before positioning the coffee maker 11 over a heat source, for example a gas cooker, the boiler 12 is filled with water 16 and the containing filter 15 is filled with the ground coffee 20. It is noted that, for the coffee maker to operate correctly, it is appropriate to fill the filter 15 completely with the ground coffee 20 so as to not leave any empty space beneath the filtering plate 14 connected to the lower base of the collection recipient 13 in accordance with the prior art. Filling the filter 15 and the boiler 12 is made possible by the fact that the recipient 13 can be unscrewed from the boiler 12 and the filter 15 is removable from the boiler body. These measures are prior art and therefore not further described.

The containing filter 15 typically has a funnel shape and is provided with a lower tube 21 extending towards the interior of the boiler 12 as shown in FIG 1. When the appropriately filled coffee maker 11 is placed on the fire the water 16 in the boiler 12 begins to heat. Upon reaching the boiling point, the water is pushed into the lower tube 21 by the pressure generated in the boiler 12. After rising in the lower tube 21 the water passes through the pierced bottom 23 of the filter 15 and reaches the ground coffee 20. Again under the thrust of pressure in the boiler 12, the water passes through the layer of ground coffee 20 and absorbs the aromas of the coffee and, indeed, changes into coffee. Said coffee passes though the filtering plate 14 to reach the delivery tube 19 arranged inside the collection recipient 13. At the top of the delivery tube 19 is provided a delivery mouth 19a from which emerges the coffee 17 to fall onto the bottom of the recipient 13. Advantageously the collection recipient 13 has a closing cover 18 to prevent boiling coffee from splashing out of the coffee maker 11 upon delivery from the delivery mouth 19a.

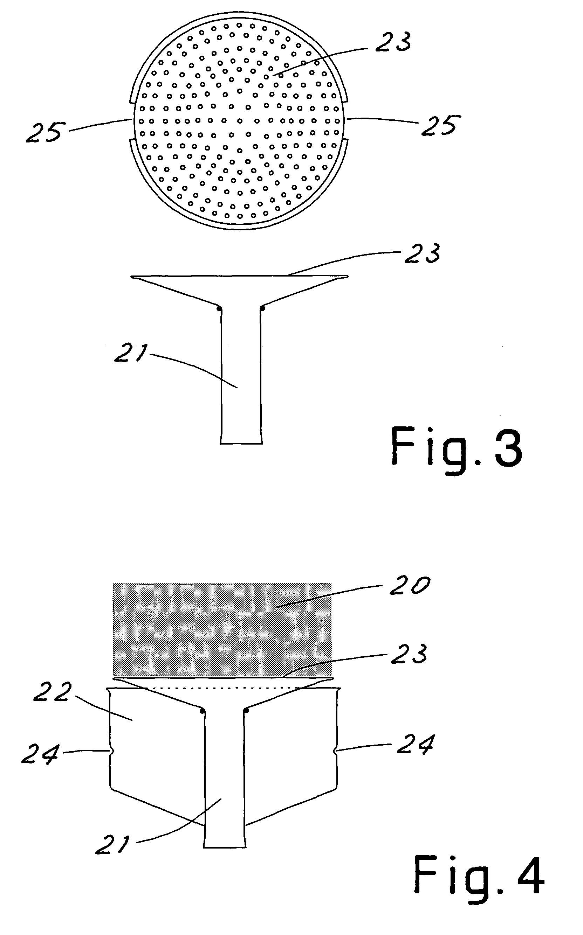

The ground coffee containing filter 15 has a pierced bottom 23 movable vertically in an outer shell 22 of the filter. The pierced bottom 23 is integral with the lower tube 21 of the filter 15 and is movable in relation to the outer shell 22 between a lowered coffee-maker operating position (see FIG 2) and a raised position for filter cleaning (see FIG 4). The raised position of the pierced bottom, indeed, allows easy removal of the wet coffee grounds used to make the coffee. Advantageously, when the containing filter 15 is configured for cleaning operations the pierced bottom 23 is located slightly protruding from the upper opening of the filter 15.

The pierced bottom 23 can be advantageously made in the same piece with the lower tube 21. Said lower tube goes through a purposeful passing hole made in the bottom of the outer shell 22 so as to be able to slide in it. Once the filter 15 is withdrawn from the body of the boiler 12, by moving the lower tube 21 in relation to the outer shell 22 it is possible to raise the pierced bottom 23 to achieve a configuration suited to cleaning of the filter shown in FIG 4. Advantageously, the lower terminal part of the tube 21 is tapered in shape with a slightly increasing diameter so as to be jammed in the hole of the outer shell 22 to block the pierced bottom 23 in the position suitable for cleaning of the filter 15.

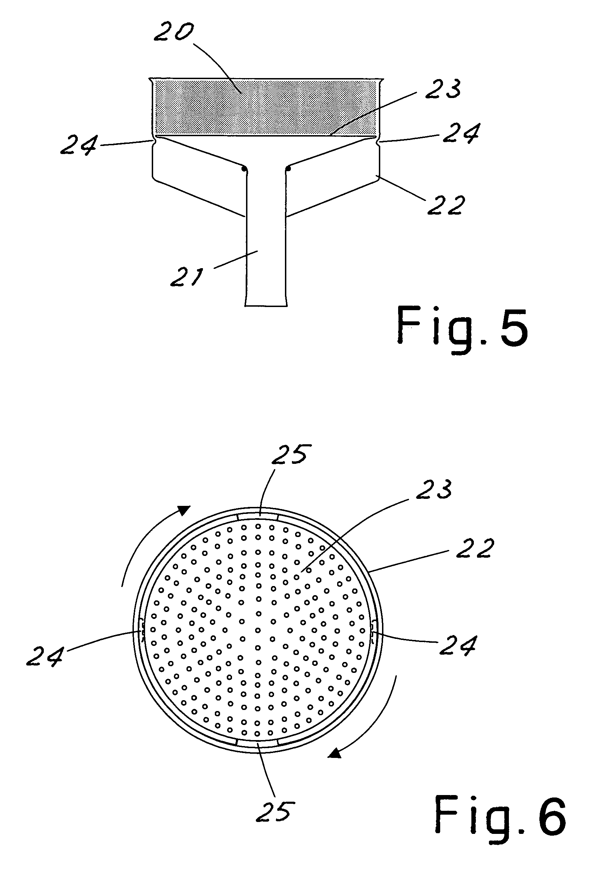

In accordance with a preferred realization of the present invention, on the internal side wall of the outer shell 22 of the filter 15 there are formed two teeth 24 arranged diametrically opposed and projecting inward of the filter 15. On the outer edge of the pierced bottom 23 there are made two recesses 25 arranged diametrically opposed to each other. When the coffee maker is used to make the full capacity of its containing filter 15, the pierced bottom 23 is arranged in the shell 22 so that the recesses 25 have an angular position corresponding to that of the teeth 24. In this manner the pierced bottom 23 can slide inside the shell 22 between the fully lowered position with the pierced bottom 23 lying on the bottom of the outer shell 22 (see FIG 2) and the raised position for filter cleaning (shown in FIG 4). However, if starting from the raised cleaning position the pierced bottom 23 is rotated axially in relation to the outer shell 22 (see FIG 6) it is possible to achieve a new configuration of the containing filter 15. In this new configuration (shown in FIG 5) the pierced bottom 23 of the filter 15 is arranged in the outer shell 22 at an intermediate height in relation to the raised, cleaning position and the fully lowered position described above. This arrangement is made possible by the engagement realized between the teeth 24 and the edge of the pierced bottom 23. As shown in FIG 5, in this manner it is possible to arrange in the filter 15 a quantity of ground coffee 20 less than with the pierced bottom 23 fully lowered without leaving any empty space between the filtering plate 14 and the ground coffee 20. This device ensures good operation of the coffee maker even when using a quantity of ground coffee less than the full capacity of the filter. It is noted that when the filter 15 is configured as in FIG 5, only part of the water contained in the boiler is used during operation of the coffee maker. Indeed, integrally with the pierced bottom, the lower tube of the filter is raised in relation to the lowered configuration of FIG 2 and said tube can therefore draw from the boiler only a reduced amount of boiling water. In this manner the proportion of ground coffee to the water used is held nearly constant to ensure high quality of the coffee under all coffee maker operating conditions.

It is now clear that the preset purposes of the present invention have been achieved. In fact, a coffee-containing filter suited to being cleaned more easily and conveniently as compared to filters of conventional coffee makers has been realized. Indeed, the movability of the pierced bottom of the containing filter allows configuration of the filter in such a manner as to facilitate removal of the wet grounds used to prepare the coffee. In addition, the presence of the teeth on the inner wall of the outer shell of the containing filter allows obtaining a dual filter-operating configuration. This allows increasing the operating flexibility of the coffee maker and makes possible changing the quantity of ground coffee used without leaving empty spaces below the filtering plate. In this manner, waste of coffee is avoided when it is desired to prepare a smaller quantity of coffee than the maximum allowed by the coffee maker.

Naturally the above description of an embodiment applying the innovative principles of the present invention is given by way of non-limiting example of said principles within the scope of the exclusive right claimed here. For example, the lower tube of the funnelling filter could be a telescopic tube designed to extend until it brushes the bottom of the boiler when the pierced bottom is brought to the intermediate height position. This device would allow use of all the water contained in the boiler even with a reduced quantity of ground coffee and, indeed, the extended tube would allow all the water in the boiler to begin rising towards the ground coffee. A solution of this kind is particularly useful when it is desired to prepare barley coffee, which, as known, requires a smaller amount of grounds for the same amount of water than normal coffee. As an alternative to using the telescopic tube, an extension tube cold be applied to the lower end of the lower tube to obtain the same functional advantages.

In addition, the intermediate positions of the pierced bottom inside the outer shell of the containing filter could also even be more than one. This result could be achieved merely by adding additional pairs of teeth to the inner wall of the outer shell of the filter. This device would further increase the operating flexibility of the mocha coffee maker by allowing more precise measurement of the quantity of ground coffee to be used in preparing the coffee.

## Claims

1. Ground-coffee containing filter to be used in a mocha coffee maker including a water boiler (12) communicating with the filter (15) through a lower tube (21) of the filter and a coffee collecting recipient (13) communicating below with the filter (15) with said containing filter including a pierced bottom (23) and an outer shell (22) having a cylindrical internal wall which contributes with the pierced bottom (23) to definition of the space containing the ground coffee in the filter and **characterized in that** the pierced bottom (23) is movable in the outer shell (22) between a fully lowered position for receiving the fullest amount of ground coffee in the filter (15) and at least one raised position reducing the capacity of the filter (15) with there being means of engagement between the pierced bottom (23) and the outer shell (22) in said raised position.

2. Containing filter in accordance with claim 1 **characterized in that** said pierced bottom (23) is integral with said lower tube (21) and is connected at the open upper end of the tube by a truncated-cone union coaxial with the tube with said lower tube running in a through hole in the outer shell (22) of the filter during movement of the pierced bottom (23) between at least one raised position and said fully lowered position.

3. Containing filter in accordance with claim 1 **characterized in that** a raised position reduces the capacity of the containing filter (15) to a fraction between 20% and 80% of its maximum capacity.

4. Containing filter in accordance with claim 3 **characterized in that** said outer shell (22) is provided with projecting teeth (24) formed on its internal side wall with said raised position being realized by engagement of the external edge of the pierced bottom (23) with said teeth (24) and said external edge being provided with corresponding recesses (25) to allow running of the pierced bottom between a position at a height lower than the teeth (24) and a position at a height higher than the teeth (24) with said pierced bottom (23) being able to turn around its axis inside the outer shell (22) between an angular position of engagement with the teeth and an angular position of disengagement therefrom.

5. Containing filter in accordance with claim 4 **characterized in that** said teeth (24) are two and are arranged nearly diametrically opposite each other.

6. Containing filter in accordance with claim 1 **characterized in that** a raised position of the pierced bottom (23) reduces the capacity of the containing filter (15) nearly to zero to facilitate cleaning of the filter after use of the coffee maker.

7. Containing filter in accordance with claims 2 and 6 **characterized in that** a lower end portion of the lower tube (21) has a tapered shape to lodge in the hole in the bottom of the outer shell (22) and block the pierced bottom (23) in said raised position to facilitate cleaning of the pierced bottom (23).

8. Containing filter in accordance with claim 6 **characterized in that** said raised positions of the pierced bottom (23) are two and the first is said position to facilitate cleaning of the filter while the second has the pierced bottom (23) positioned at an intermediate height between said fully lowered position and said raised position.

9. Containing filter in accordance with claim 1 **characterized in that** said lower tube (21) is telescopic.

10. Mocha coffee maker including a water boiler (12) and a ground-coffee containing filter (15) communicating with said boiler (12) through a lower tube (21) and a coffee collecting recipient (13) communicating below with the filter (15) **characterized in that** the containing filter (15) is made in accordance with any of claims 1 to 9.
